# EUROPEAN PATENT APPLICATION

(11) **EP 2 752 650 A1**
(43) Date of publication of application: **09.07.2014**
(21) Application number: 11871463.3
(22) Date of filing: 01.09.2011
(51) Int. Cl.: G01L 1/26, B25J 13/08, B25J 19/02, G01L 5/00

(54) **FORCE SENSOR AND ROBOT**

(71) Applicant: Kabushiki Kaisha Yaskawa Denki, Kitakyushu-shi, Fukuoka 806-0004 (JP)
(72) Inventor: NAGATA Hideo, Kitakyushu-shi Fukuoka 806-0004 (JP); NAGAI Ryoichi, Kitakyushu-shi Fukuoka 806-0004 (JP); INOUE Yasuyuki, Kitakyushu-shi Fukuoka 806-0004 (JP); KUBOTA Yoshiaki, Kitakyushu-shi Fukuoka 806-0004 (JP)
(74) Representative: Grünecker, Kinkeldey, Stockmair & Schwanhäusser
(86) International application number: PCT/JP2011/069941
(87) International publication number: WO 2013/031007

(57) **Abstract**

A force sensor 10 and a robot 14 that can suppress a load applied to load sensor elements are provided.

A force sensor 110 includes: a first base member 30a one surface of which is fixed on a fixed member; a plurality of load sensor elements S1 to S4 that is provided on another surface of the first base member 30a to detect a load; a second base member 130b that is disposed facing the other surface of the first base member 30a to generate a preload to be applied to each of the load sensor elements S1 to S4 toward the first base member 30a; a preload adjusting unit 140 that adjusts the magnitude of the preload generated by the second base member 130b; and buffer bodies 32a and 32b that receive a part of an external load to be applied to each of the load sensor elements S1 to S4 from the outside.

## Description

### Field

The present invention relates to a force sensor and a robot.

### Background

Patent Literature 1 describes a multiaxial force sensor capable of detecting at least the following elements: three components of force acting in the X-axis, Y-axis, and Z-axis coordinate directions perpendicular to each other and moments around the X-axis and Y-axis. This multiaxial force sensor includes an outer ring part having a ring-shaped inner peripheral surface centered on the coordinate origin O on a reference plane including the X-axis and Y-axis, an inner ring part having a ring-shaped outer peripheral surface facing the inner peripheral surface of the outer ring part, and a plurality of load sensor elements connecting the inner peripheral surface and the outer peripheral surface. The inner peripheral surface of the outer ring part has a tapered inner surface that is inclined with respect to the Z-axis. The outer peripheral surface of the inner ring part has a tapered outer surface that is inclined with respect to the Z-axis such that it faces the tapered inner surface. The load sensor elements are interposed between the tapered inner surface and the tapered outer surface.

### Citation List

### Patent Literature

Patent Literature 1: Japanese Patent Application Laid-open No. 2006-071506

### Summary

### Technical Problem

Herein, when a load applied to the force sensor is applied to the load sensor elements without being reduced, the load sensor elements may be broken.

The present invention aims to provide a force sensor and a robot that can suppress a load applied to load sensor elements.

### Solution to Problem

According to one aspect of the present invention, in order to solve the above problem, a force sensor includes: a first base member one surface of which is fixed on a fixed member; a plurality of load sensor elements that is provided on another surface of the first base member to detect a load; a second base member that is disposed facing the other surface of the first base member to generate a preload to be applied to each of the load sensor elements toward the first base member; a preload adjusting unit that adjusts magnitude of the preload generated by the second base member; and a buffer body that receives a part of an external load to be applied to each of the load sensor elements from outside.

According to other aspect of the present invention, a robot includes: a force sensor mounted on a flange of a wrist portion; and an end effector attached to a tip side of the force sensor, the force sensor includes: a first base member one surface of which is fixed on the flange; a plurality of load sensor elements that is provided on another surface of the first base member to detect a load; a second base member that is disposed facing the other surface of the first base member to generate a preload to be applied to each of the load sensor elements toward the first base member; a preload adjusting unit that adjusts magnitude of the preload generated by the second base member; and a buffer body that receives a part of an external load to be applied to each of the load sensor elements from the end effector.

### Advantageous Effects of Invention

According to the present invention, a load applied to load sensor elements can be suppressed.

### Brief Description of Drawings

FIG. 1 is a schematic diagram of a robot having a force sensor according to a first embodiment of the present invention.
FIG. 2 is a plan view of the force sensor.
FIG. 3 is an A-A cross-sectional diagram of FIG. 2.
FIG. 4 is a layout drawing of load sensor elements that the force sensor has.
FIG. 5 is a plan view of a force sensor according to a second embodiment of the present invention.
FIG. 6 is a B-B cross-sectional diagram of FIG. 5.
FIG. 7 is a schematic diagram illustrating a modification of a preload adjusting unit of the force sensor.
FIG. 8 is a perspective view of a force sensor according to a third embodiment of the present invention.
FIG. 9 is a plan view of the force sensor.
FIG. 10 is an end view of a C-C cross section of FIG. 9.

### Description of Embodiments

Specific embodiments of the present invention will now be described with reference to the attached drawings for understanding of the present invention. In each drawing, illustration of parts irrelevant to the description (e.g., power line or signal line) may be omitted.

### <First Embodiment>

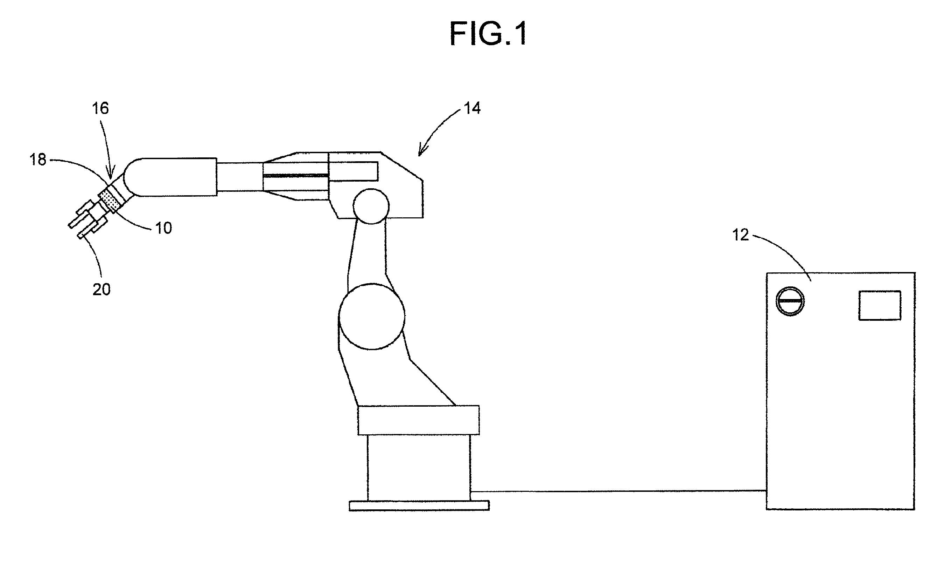

A force sensor 10 according to a first embodiment of the present invention is provided on a vertical articulated robot (one example of a robot) 14 to which a robot control device 12 is connected as illustrated in FIG. 1, for example. More specifically, the force sensor 10 is mounted on a flange 18 of a wrist portion 16 of the robot 14. To the tip side of the force sensor 10, an end effector 20 is attached.

The force sensor 10 is a detector for detecting force applied to the end effector 20 (force applied from the outside of the force sensor 10).

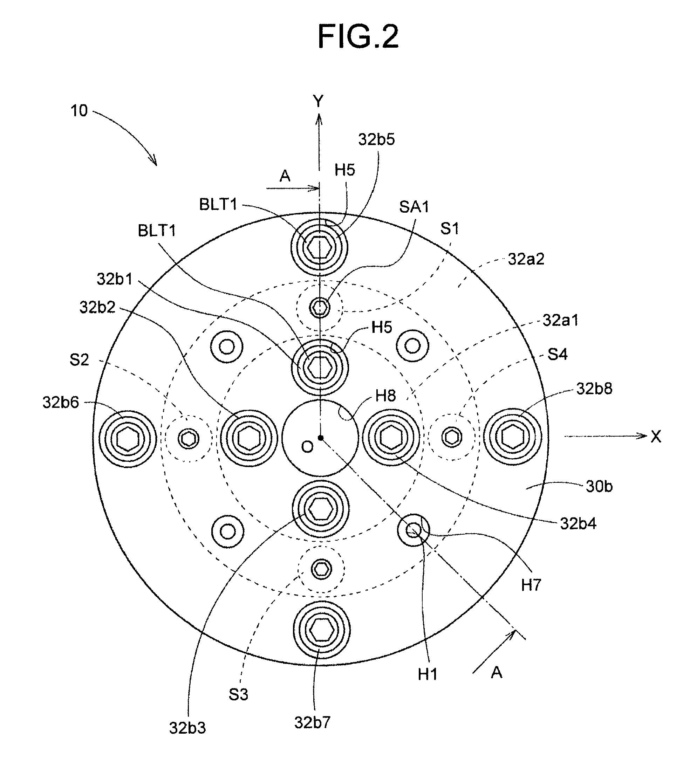

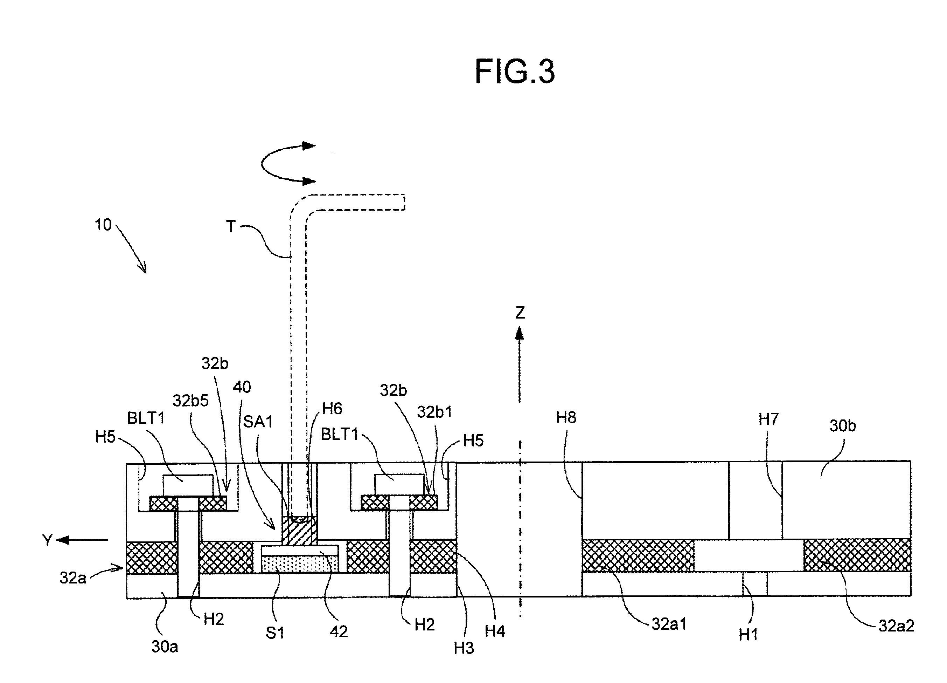

As illustrated in FIG. 2 and FIG. 3, the force sensor 10 includes a first base member 30a, a first buffer portion 32a, load sensor elements S1 to S4, a second base member 30b, a second buffer portion 32b, and a preload adjusting unit 40.

The coordinate system illustrated in FIG. 2 to FIG. 4 is a rectangular coordinate system having an x-axis, a y-axis, and a z-axis with a coordinate origin O that is the center of the force sensor 10.

The first base member 30a is a disk-shaped member, one surface of which is fixed on a flange (one example of a fixed member) 18.

In the first base member 30a, a plurality of holes H1 for attachment to the flange 18 are formed. In the first base member 30a, for example, eight threaded holes H2 for fixing the second base member 30b are also formed.

In a central part of the first base member 30a, a hole H3 through which wiring for an actuator for driving the end effector 20 and a sensor, for example, is passed is formed.

The first buffer portion 32a is provided between the first base member 30a and the second base member 30b that is disposed facing the other surface of the first base member 30a, and can receive part of an external load applied to each of the load sensor elements S1 to S4 (load in a direction of compressing the load sensor elements S1 to S4). The first buffer portion 32a has an elastic modulus in the thickness direction higher than those of the respective load sensor elements S1 to S4. When a preload is not applied to each of the load sensor elements S1 to S4, the thickness of the first buffer portion 32a is larger than the total thickness of each of the load sensor elements S1 to S4 and a pressing plate 42 that is disposed on a detector plane of each of the load sensor elements S1 to S4.

The first buffer portion 32a can be configured to be divided into a first ring-shaped member 32a1 and a second ring-shaped member 32a2 as described below, for example.

The first ring-shaped member 32a1 is a member having a ring shape. The first ring-shaped member 32a1 has an elastic modulus in the thickness direction higher than those of the respective load sensor elements S1 to S4. In addition, the thickness of the first ring-shaped member 32a1 is larger than the total thickness of each of the load sensor elements S1 to S4 and the pressing plate 42 that is disposed on the detector plane of each of the load sensor elements S1 to S4. In a central part of the first ring-shaped member 32a1, a hole H4 through which wiring for one or more actuators for driving the end effector 20 and one or more sensors, for example, is passed is formed.

The first ring-shaped member 32a1 is disposed on the other surface of the first base member 30a (the surface on the opposite side of the flange 18) with the hole H3 and the hole H4 aligned.

The second ring-shaped member 32a2 is a member having a ring shape. The second ring-shaped member 32a2 has an elastic modulus in the thickness direction higher than those of the respective load sensor elements S1 to S4. In addition, the thickness of the second ring-shaped member 32a2 is larger than the total thickness of each of the load sensor elements S1 to S4 and the pressing plate 42 that is disposed on the detector plane of each of the load sensor elements S1 to S4. The thicknesses of the first and the second ring-shaped members 32a1 and 32a2 are substantially the same.

The outer diameters of the second ring-shaped member 32a2 and the first base member 30a are substantially the same. The second ring-shaped member 32a2 has an inner diameter larger than the outer diameter of the first ring-shaped member 32a1. The second ring-shaped member 32a2 is provided on the other surface (surface opposite to the flange 18) of the first base member 30a with the outer periphery thereof aligned with the outer periphery of the first base member 30a. The second ring-shaped member 32a2 is disposed outside the first ring-shaped member 32a1.

The first buffer portion 32a may be configured in an integrated manner. As another example of the first buffer portion, a member in which holes are formed around the respective load sensor elements S1 to S4 or around bolts penetrating may be used.

Each of the load sensor elements S1 to S4 is a detector for detecting the magnitude of force in the Z-axis direction. For example, each of the load sensor elements S1 to S4 is a pressure-sensitive element the electric resistance value of which changes in response to force applied from the outside. By connecting an electric circuit (not illustrated) that outputs a voltage based on the change in electric resistance with each of the load sensor elements S1 to S4 and converting the change in the voltage output by this electric circuit into force, force applied to each of the load sensor elements S1 to S4 can be measured. The relation between voltage and force is obtained in advance by calibration.

The load sensor elements may be piezoelectric elements that generate voltage in response to force applied from the outside.

Each of the load sensor elements S1 to S4 is provided on the outer peripheral side of the first ring-shaped member 32a1 and on the inner peripheral side of the second ring-shaped member 32a2, and on the other surface of the first base member 30a. More specifically, as illustrated in FIG. 2, the respective load sensor elements S1 to S4 are evenly disposed on substantially the same circumference, and are disposed on the X-axis and the Y-axis when seen in a plan view.

The second base member 30b is a disk-shaped member, and is disposed facing the other surface of the first base member 30a. The second base member 30b can generate a preload to be applied to each of the load sensor elements S1 to S4 toward the first base member 30a.

The purpose of applying the preload to each of the load sensor elements S1 to S4 is to detect both of a compressive load (force in the direction of compressing the load sensor elements) and a tensile load (force in the tensile direction opposite to the direction of compressing the load sensor elements).

In the second base member 30b, eight countersinks H5 corresponding to the threaded holes H2 formed in the first base member 30a are formed. The countersinks H5 are each disposed on the inner side and the outer side of the respective load sensor elements S1 to S4 when seen in a plan view as illustrated in FIG. 2.

The second base member 30b is fixed to the first base member 30a with the first and the second ring-shaped members 32a1 and 32a2 interposed therebetween by respective bolts BLT1 inserted into the countersinks H5, and generate a preload for each of the load sensor elements S1 to S4.

In a position of the second base member 30b that faces each of the load sensor elements S1 to S4, a threaded hole H6 is formed in the Z-axis direction (thickness direction).

In positions of the second base member 30b that face the holes HI, respective holes H7 are formed. Thus, bolts not illustrated are inserted into the holes H7 and the holes H1, whereby the force sensor 10 is fixed on the flange 18.

Furthermore, in a central part of the second base member 30b, a hole H8 through which wiring for an actuator for driving the end effector 20 and a sensor, for example, is passed is formed.

The second buffer portion 32b can receive part of an external load applied in the tensile direction that is opposite to the compressive direction of the respective load sensor elements S1 to S4.

The second buffer portion 32b (see FIG. 3) has an elastic modulus in the thickness direction higher than those of the respective load sensor elements S1 to S4. To make the thickness of the second buffer portion 32b thinner than the thickness of the first buffer portion 32a, the value of the elastic modulus of the second buffer portion 32b can be set equal to or larger than the value of the elastic modulus of the first buffer portion 32a.

The second buffer portion 32b is constituted by, for example, a plurality of third ring-shaped members 32b1 to 32b8 (see FIG. 2 and FIG. 3). The respective third ring-shaped members 32b1 to 32b8 are inserted into the countersinks H5 formed in the second base member 30b as described above, and are interposed between the bolts (one example of a fixation screw) BLT1 and the second base member 30b and fixed by the bolts BLT1.

The material of the second buffer portion 32b may be the same as that of the first buffer portion 32a.

By the first buffer portion 32a and the second buffer portion 32b, one example of a buffer body that receives part of a load applied to each of the load sensor elements S1 to S4 from the outside (end effector 20) is constituted.

The preload adjusting unit 40 can adjust the magnitude of the preload generated by the second base member 30b.

The preload adjusting unit 40 includes a plurality of preload adjusting screws (one example of second adjusting screws) SA1 that advances or retreats along the threaded hole H6 formed in the thickness direction of the second base member 30b and thus can press the load sensor elements S1 to S4. By inserting a tool T from the positive direction of the Z-axis to advance or retreat the preload adjusting screws SA1, a preload applied to each of the load sensor elements S1 to S4 via the pressing plate 42 can be adjusted. The purpose of applying a preload to each of the load sensor elements S1 to S4 via the pressing plate 42 is to apply forces that are as equal as possible to respective detector planes of the load sensor elements S1 to S4.

As the preload adjusting screws SA1, for example, hexagon socket set screws (socket set screws) can be used.

The principle of measuring translational force in each axial direction (three components of translational force) from detection values of the respective load sensor elements S1 to S4 will be described below.

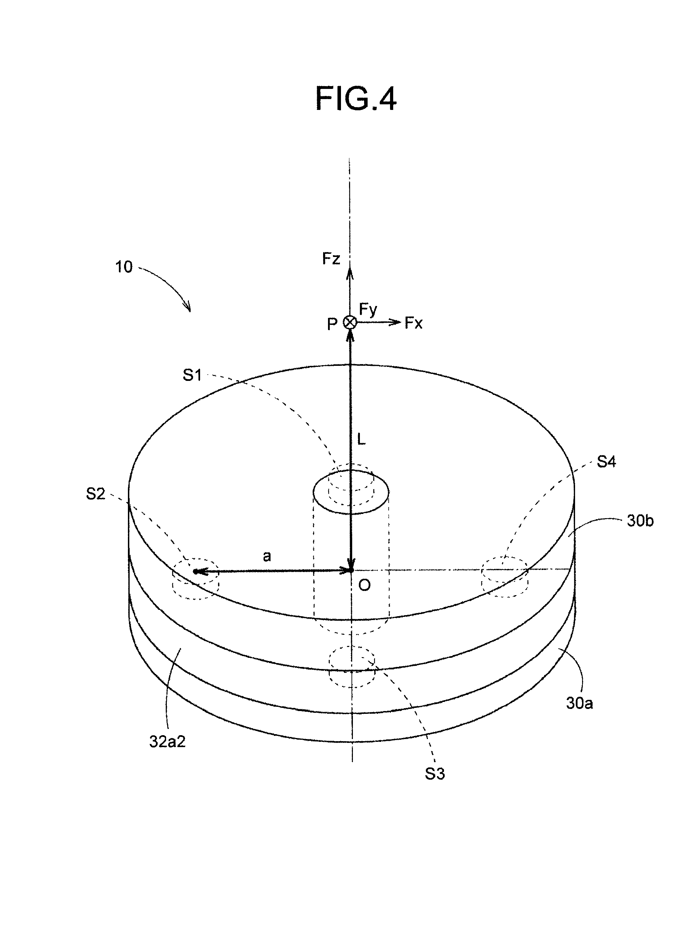

For example, as illustrated in FIG. 4, when a known force is applied to a point P on the end effector 20 (not illustrated in FIG. 4), a moment acts around the origin O of the coordinate system. The force applied to the point P can be easily obtained, for example, when parts are assembled by using the end effector 20.

If a distance L from the coordinate origin O to the point P and a distance a from the coordinate origin O to the respective load sensor elements S1 to S4 are known, a force Fx in the X-axis direction can be calculated from output values of the respective load sensor elements S1 to S4. In the same manner, a force Fy in the Y-axis direction can be calculated from the output values of the respective load sensor elements S1 to S4. A force Fz in the Z-axis direction can be calculated from the sum of the output values of the respective load sensor elements S1 to S4.

Even when an excessively large force is applied to the force sensor 10, part of the force is received by the first buffer portion 32a or the second buffer portion 32b, whereby forces received by the respective load sensor elements S1 to S4 are moderated. More specifically, when a compressive load is applied to each of the load sensor elements S1 to S4, the compressive load is divided in the ratio of the elastic modulus between the first buffer portion 32a and the load sensor elements S1 to S4. When a tensile load is applied to each of the load sensor elements S1 to S4, the tensile load are divided in the ratio of the elastic modulus between the second buffer portion 32b and the load sensor elements S1 to S4.

As described above, because the force sensor 10 exemplified in the present embodiment has the first and the second buffer portions 32a and 32b, loads applied to the load sensor elements S1 to S4 can be suppressed. In addition, preloads applied to the respective load sensor elements S1 to S4 can each be independently adjusted from the tip side of the robot 14 (opposite side of the flange 18). Furthermore, the thickness of the force sensor 10 can be reduced.

### <Second Embodiment>

Subsequently, a force sensor 110 according to a second embodiment of the present invention will be described. The same symbols are given to the same components as those of the force sensor 10 according to the first embodiment, and detailed explanation may be omitted.

The force sensor 110 according to the present embodiment differs from the force sensor 10 according to the first embodiment mainly in a preload adjusting unit.

In addition, the shape of a second base member differs from that in the force sensor 10 according to the first embodiment. Furthermore, the disposition of the respective load sensor elements S1 to S4 differs from that in the force sensor 10 according to the first embodiment.

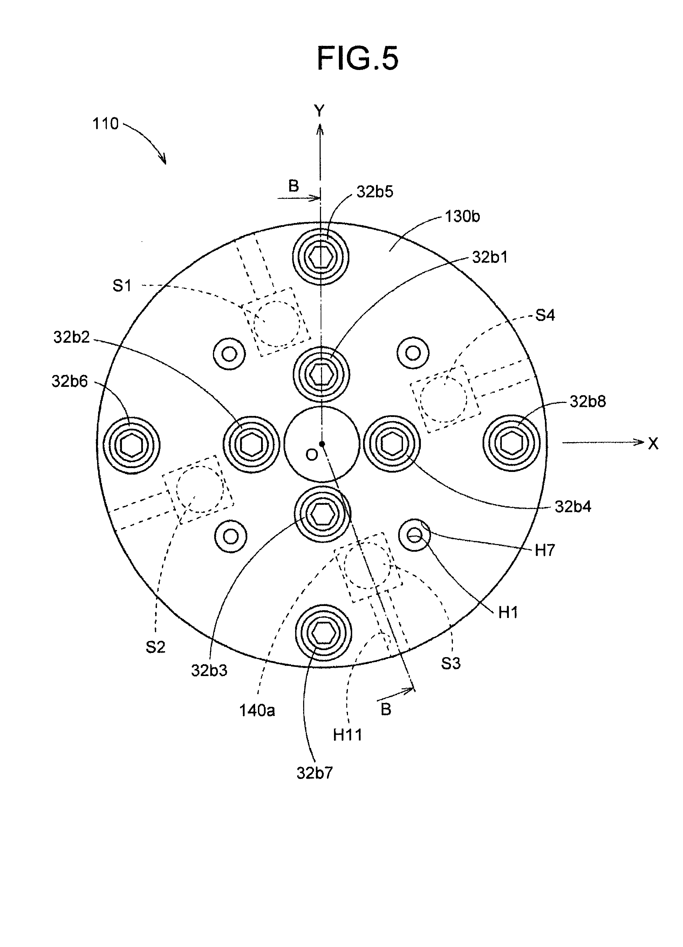

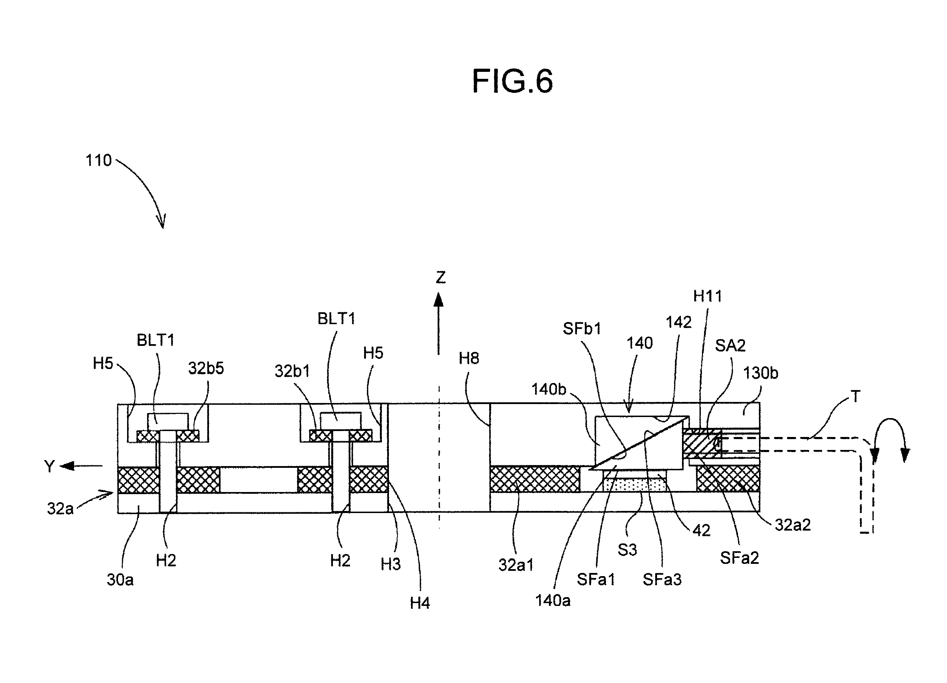

This second base member 130b is disposed facing the other surface of the first base member 30a as illustrated in FIG. 5 and FIG. 6, and can generate a preload to be applied to each of the load sensor elements S1 to S4 toward the first base member 30a.

In the second base member 130b, the countersinks H5 corresponding to the threaded holes H2 formed in the first base member 30a are formed. The second base member 130b is fixed to the first base member 30a with the first and the second ring-shaped members 32a1 and 32b1 interposed therebetween by the respective bolts BLT1 that are inserted into the countersinks H5 with the third ring-shaped members 32b1 to 32b8 interposed therebetween, and generates a preload.

As illustrated in FIG. 6, in the second base member 130b, a threaded hole H11 is formed in the direction toward the central part of the second base member (direction intersecting with the thickness direction of the second base member 130b). The threaded hole H11 is open to the outer peripheral surface of the second base member 130b.

In the positions of the second base member 130b that face the holes H1, the respective holes H7 are formed. Thus, bolts not illustrated are inserted into the holes H7 and the holes H1, whereby the force sensor 110 is fixed on the flange 18.

Furthermore, in the central part of the second base member 130b, the hole H8 through which wiring for an actuator for driving the end effector 20 and a sensor, for example, is passed is formed.

The preload adjusting unit 140 has a preload adjusting screw (one example of a first adjusting screw) SA2 and a wedge mechanism that is in contact with the preload adjusting screw SA2 and converts a force applied by the preload adjusting screw SA2 into a force compressing each of the load sensor elements S1 to S4.

The preload adjusting screw SA2 advances or retreats along the screw hole H11. The preload adjusting screw SA2 is turned by the tool T inserted from a side surface of the force sensor 110. As the preload adjusting screw SA2, for example, a hexagon socket set screw (socket set screw) can be used.

The wedge mechanism has a first adjusting member 140a and a second adjusting member 140b.

The first adjusting member 140a is a wedge-shaped member, for example. In the first adjusting member 140a, 1) a pressing surface SFa1 for pressing the load sensor element, 2) a pressed surface SFa2 that intersects with the pressing surface SFa1 and is pressed by the preload adjusting screw SA2, and 3) an inclined surface SFa3 that intersects with the pressing surface SFa1 and the pressed surface SFa2 are formed.

The first adjusting member 140a can move toward the center of the force sensor 110.

The second adjusting member 140b is a wedge-shaped member, for example. The second adjusting member 140b is fixed in a hollow portion 142 formed on a surface of the second base member 130b on the side facing the first base member 30a. On the second adjusting member 140b, a contact surface SFb1 that is in contact with the inclined surface SFa3 of the first adjusting member 140a is formed.

The second adjusting member 140b may be configured to be part of the second base member 130b.

Operation in adjusting a preload of the force sensor 110 will be described below.

When an operator turns the preload adjusting screw SA2 using the tool T, the preload adjusting screw SA2 pushes the pressed surface SFa2 of the first adjusting member 140a. When the first adjusting member 140a pushed by the preload adjusting screw SA2 moves on a plane toward the center of the force sensor 110, the inclined surface SFa3 is pushed by the contact surface SFb1 of the second adjusting member 140b toward the first base member 30a. As a result, the pressing surface SFa1 of the first adjusting member 140a pushes the load sensor element S3 via the pressing plate 42 (in the same manner also for the load sensor elements S1, S2, and S4).

In other words, when the operator turns the tool T, the preload for the load sensor element is adjusted.

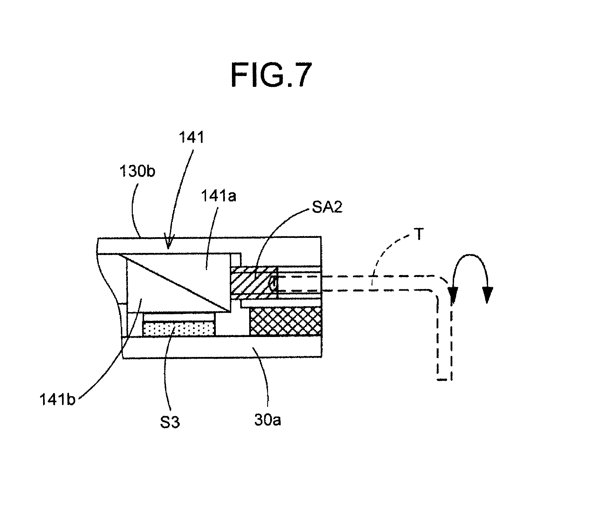

As illustrated in FIG. 7, the wedge mechanism may have a third adjusting member 141a in a wedge shape pressed by the preload adjusting screw SA2 and a fourth adjusting member 141b in a wedge shape disposed between the third adjusting member 141a and the load sensor element S3 to constitute part of a preload adjusting unit 141.

When the preload adjusting screw SA2 is turned, the third adjusting member 141a moves on the XY plane toward the center of the force sensor 110, and the fourth adjusting member 141b pushes the load sensor element S3. Thus, the preload adjusting unit 141 can adjust the preload of the load sensor element S3.

As describe above, because the force sensor 110 exemplified in the present embodiment has the first and the second buffer portions 32a and 32b, loads applied to the load sensor elements S1 to S4 can be suppressed. In addition, preloads applied to the respective load sensor elements S1 to S4 can each be independently adjusted without removing the end effector 20 provided on the tip side. Furthermore, the thickness of the force sensor 110 can be reduced.

### <Third Embodiment>

Subsequently, a force sensor 210 according to a third embodiment of the present invention will be described. The same symbols are given to the same components as those of the force sensors 10 and 110 according to the first and the second embodiments, and detailed explanation may be omitted.

The force sensor 210 according to the present embodiment differs from the force sensor 110 according to the second embodiment mainly in a buffer body. In addition, the shapes of first and the second base members differ from those in the force sensor 110 according to the second embodiment.

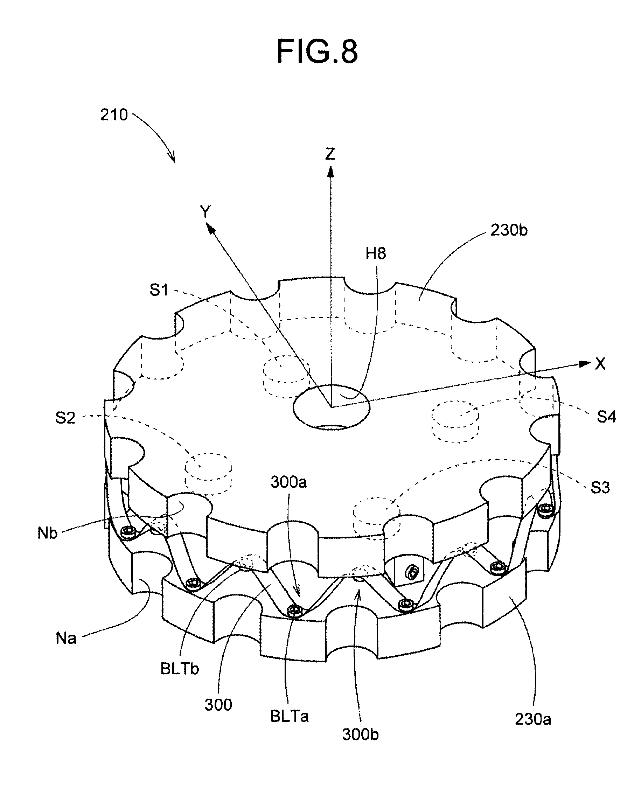

The buffer body is provided between this first base member 230a and this second base member 230b, and can receive part of a load applied to each of the load sensor elements S1 to S4 from the outside. As illustrated in FIG. 8, the buffer body is a ring-shaped spring member 300 both surfaces of which are bent in a direction intersecting with a radial direction to alternately and repeatedly form concave portions 300a and convex portions 300b in the circumferential direction. The concave portions 300a are fixed on an outer peripheral portion of the first base member 230a with bolts BLTa, and the convex portions 300b are fixed on an outer peripheral portion of the second base member 230b with bolts BLTb.

The spring member 300 has an elastic modulus in the thickness direction (central-axis direction intersecting with the radial direction) higher than those of the load sensor elements S1 to S4.

The spring member 300 is a wave spring, for example.

In the first base member 230a, notches Na for inserting a tool for fastening the bolts BLTb are formed in the outer peripheral portion.

In the second base member 230b, notches Nb for inserting a tool for fastening the bolts BLTa are formed in the outer peripheral portion.

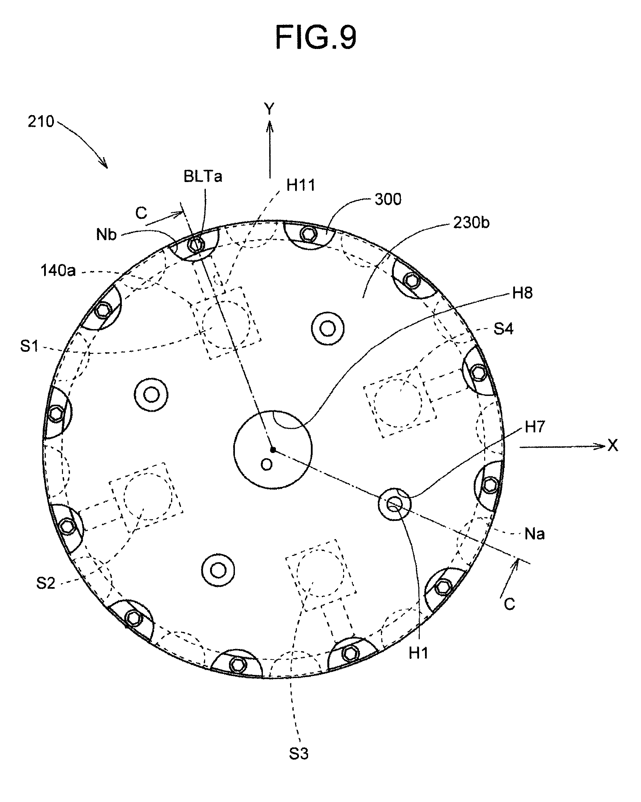

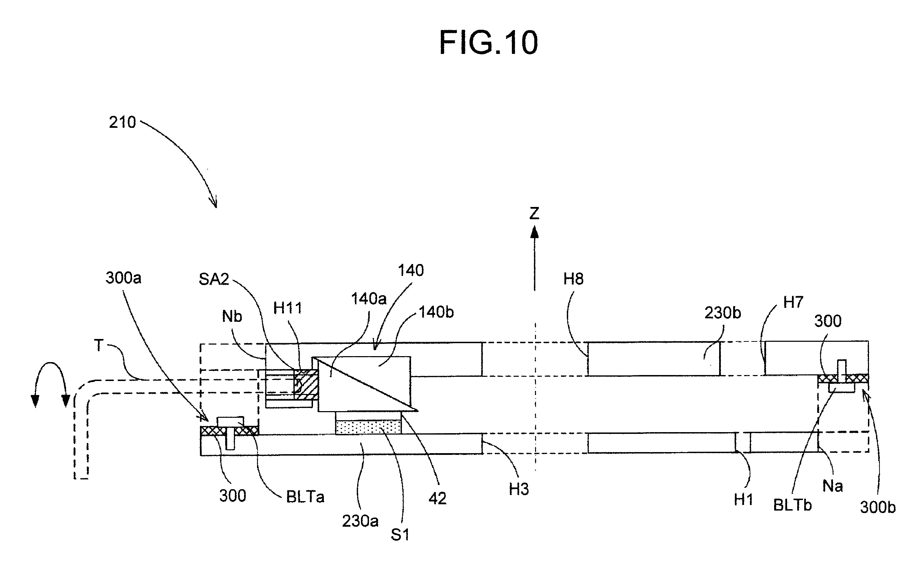

As illustrated in FIG. 10, the preload adjusting unit 140 is configured to be substantially the same as the preload adjusting unit exemplified in the second embodiment. However, the threaded hole H11 through which the preload adjusting screw SA2 advances and retreats is formed in the second base member 230b in a direction from a central part of the force sensor 210 toward the corresponding bolt BLTa when seen in a plan view (see FIG. 9). The threaded hole H11 is formed in the direction from the central part of the force sensor 210 toward the corresponding bolt BLTa, whereby the tool T for turning the preload adjusting screw SA2 can be prevented from interfering with the spring member 300.

The threaded hole H11 only has to be disposed in a position where the tool T for turning the preload adjusting screw SA2 does not interfere with the spring member 300, and can also be formed in a direction from the central part of the force sensor 210 toward the corresponding bolt BLTb, for example.

The preload adjusting unit herein may include the preload adjusting screws SA1 each of which advances or retreats along the threaded hole H6 formed in the thickness direction of the second base member and thus can press each of the load sensor elements S1 to S4 as exemplified in the first embodiment.

As described above, because the force sensor 210 exemplified in the present embodiment has the spring member 300, loads applied to the load sensor elements S1 to S4 can be suppressed. In addition, preloads applied to the respective load sensor elements S1 to S4 can each be independently adjusted without removing the end effector 20 provided on the tip side. Furthermore, the number of components can be reduced and thus the thickness can be reduced in comparison with the cases of the force sensors 10 and 110 according to the first and the second embodiments.

The present invention is not limited to the above-described embodiments, and can be modified within a range not departing from the gist of the present invention. For example, cases of combining part or all of the above-described embodiments and modifications thereof to constitute the invention are included in the technical scope of the present invention.

The force sensor may be integrated in a wrist portion of the robot, for example. Furthermore, the force sensor can be provided to a mechanical device other than a robot. Examples of the other mechanical device include a machine tool.

The number and the disposition of the respective load sensor elements are not limited to those in the above-described embodiments, and can be changed as appropriate.

### Reference Signs List

- 10: Force sensor
- 12: Robot control device
- 14: Vertical articulated robot
- 16: Wrist portion
- 18: Flange
- 20: End effector
- 30a: First base member
- 30b: Second base member
- 32a: First buffer portion
- 32a1: First ring-shaped member
- 32a2: Second ring-shaped member
- 32b: Second buffer portion
- 32b1 to 32b8: Third ring-shaped members
- 40: Preload adjusting unit
- 42: Pressing plate
- 110: Force sensor
- 130b: Second base member
- 140: Preload adjusting unit
- 140a: First adjusting member
- 140b: Second adjusting member
- 141: Preload adjusting unit
- 141a: Third adjusting member
- 141b: Fourth adjusting member
- 142: Hollow portion
- 210: Force sensor
- 230a: First base member
- 230b: Second base member
- 300: Spring member
- 300a: Concave portions
- 300b: Convex portions
- BLT1: Bolts
- BLTa: Bolts
- BLTb: Bolts
- H1: Holes
- H2: Threaded holes
- H3: Hole
- H4: Hole
- H5: Countersinks
- H6: Threaded hole
- H7: Holes
- H8: Hole
- H11: Threaded hole
- Na, Nb: Notches
- S1 to S4: Load sensor elements
- SA1, SA2: Preload adjusting screws
- SFa1: Pressing surface
- SFa2: Pressed surface
- SFa3: Inclined surface
- SFb1: Contact surface
- T: Tool

## Claims

1. A force sensor comprising:
a first base member one surface of which is fixed on a fixed member;
a plurality of load sensor elements that is provided on another surface of the first base member to detect a load;
a second base member that is disposed facing the other surface of the first base member to generate a preload to be applied to each of the load sensor elements toward the first base member;
a preload adjusting unit that adjusts magnitude of the preload generated by the second base member; and
a buffer body that receives a part of an external load to be applied to each of the load sensor elements from outside.

2. The force sensor according to claim 1, wherein the preload adjusting unit includes:
a first adjusting screw that advances or retreats along a threaded hole that is formed in a direction toward a central part of the second base member and is open to an outer peripheral surface of the second base member; and
a wedge mechanism that is in contact with the first adjusting screw to convert a force applied by the first adjusting screw into a force compressing each of the load sensor elements.

3. The force sensor according to claim 2, wherein the wedge mechanism includes:
a first adjusting member including a pressing surface for pressing the load sensor element, a pressed surface that intersects with the pressing surface and is pressed by the first adjusting screw, and an inclined surface that intersects with the pressing surface and the pressed surface; and
a second adjusting member that is provided on a surface of the second base member facing the first base member and of which a contact surface is in contact with the inclined surface.

4. The force sensor according to claim 1, wherein the preload adjusting unit includes a plurality of second adjusting screws that advances or retreats along a threaded hole formed in a thickness direction of the second base member and presses the load sensor elements.

5. The force sensor according to any one of claims 2 to 4, wherein the buffer body includes:
a first buffer portion that receives a part of the external load applied in a direction of compressing the load sensor elements; and
a second buffer portion that receives a part of the external load applied in a tensile direction opposite to the direction of compressing the load sensor elements.

6. The force sensor according to claim 5, wherein
the first buffer portion is a member provided between the first base member and the second base member, and having an elastic modulus in a thickness direction higher than an elastic modulus of each of the load sensor elements, and
the second buffer portion is a member provided between the second base member and a fixation screw for fixing the second base member to the first base member, and having an elastic modulus in the thickness direction higher than the elastic modulus of each of the load sensor elements.

7. The force sensor according to claim 6, wherein
the first buffer portion includes a first ring-shaped member and a second ring-shaped member having an inner diameter larger than an outer diameter of the first ring-shaped member, and
the load sensor elements are disposed on an outer peripheral side of the first ring-shaped member and on an inner peripheral side of the second ring-shaped member.

8. The force sensor according to any one of claims 2 to 4, wherein
the buffer body includes a ring-shaped spring member both surfaces of which are bent in a direction intersecting with a radial direction to alternately and repeatedly form concave portions and convex portions in a circumferential direction, and
the concave portions are fixed on the first base member and the convex portions are fixed on the second base member.

9. A robot comprising:
a force sensor mounted on a flange of a wrist portion; and
an end effector attached to a tip side of the force sensor,
the force sensor comprising:
a first base member one surface of which is fixed on the flange;
a plurality of load sensor elements that is provided on another surface of the first base member to detect a load;
a second base member that is disposed facing the other surface of the first base member to generate a preload to be applied to each of the load sensor elements toward the first base member;
a preload adjusting unit that adjusts magnitude of the preload generated by the second base member; and
a buffer body that receives a part of an external load to be applied to each of the load sensor elements from the end effector.
